# EUROPÄISCHE PATENTSCHRIFT

(11) **EP 3 537 019 B1**
(45) Veröffentlichungstag und Bekanntmachung des Hinweises auf die Patenterteilung: **19.04.2023**
(21) Anmeldenummer: 18160529.6
(22) Anmeldetag: 07.03.2018
(51) Int. Cl.: F16L 3/10, F16L 57/06

(54) **VORRICHTUNG ZUR BEFESTIGUNG VON SCHLÄUCHEN**
DEVICE FOR THE FIXING OF HOSES
DISPOSITIF DE FIXATION DE TUYAUX FLEXIBLES

(43) Veröffentlichungstag der Anmeldung: 11.09.2019
(73) Patentinhaber: WALTER STAUFFENBERG GMBH & CO. KG, 58791 Werdohl (DE)
(72) Erfinder: König, Ulrich Stefan, 58849 Herscheid (DE)
(74) Vertreter: Patentanwälte Dörner & Kötter PartG mbB

(56) Entgegenhaltungen:
- EP-A1- 3 048 355
- WO-A1-2009/051591
- WO-A1-2012/003905
- WO-A1-2015/177181
- JP-A- H07 269 744
- US-A- 4 709 729
- US-A- 5 004 275
- US-A1- 2012 274 061
- US-B1- 6 305 719
- US-S1- D 475 770

## Beschreibung

Die Erfindung betrifft eine Vorrichtung zur Befestigung von Schläuchen nach dem Oberbegriff des Patentanspruchs 1.

Zur Befestigung von Rohren und Schläuchen werden so genannte Schellen eingesetzt, die regelmäßig einen Schellenkörper umfassen, der aus einem thermoplastischen oder elastomeren Kunststoff oder auch aus Metall hergestellt ist. Eine solche Befestigungsvorrichtung ist beispielsweise in der WO 2009/051591 A1 beschrieben. Der Schellenkörper ist dabei häufig aus zwei miteinander verbindbaren Befestigungsteilen gebildet, die in montiertem Zustand eine Durchführung zur Aufnahme des Rohres beziehungsweise des Schlauches bilden. Derartige Schellen sind in Deutschland gemäß DIN 3015:1999-01 genormt. Zur Befestigung von Rohren wird insbesondere eine gerippte Bauform eingesetzt. Hierbei ist die Innenfläche der Durchführung zur Erhöhung der Haltekräfte mit radial umlaufenden Rippen versehen. Das aufgenommene Rohr wird zwischen den Rippenanlageflächen gehalten, wodurch die Flächenpressung erhöht ist. Das Rohr ist so in der Schelle geklemmt.

Zur Befestigung von Schläuchen kommt ein sogenanntes H-Profil zum Einsatz. Dabei ist die Durchführung durchgehend hohlzylindrisch glatt ausgebildet. Diese Ausführung soll einen aufgenommenen Schlauch führen, aber nicht klemmen.

Die Ausführung "RI" mit Elastomer-Einsatz wird zur Reduzierung von Vibrationen bei der Halterung von Rohren verwendet. Hierbei ist in die Schellendurchführung ein Elastomer-Einsatz mit einer Durchführung zur Aufnahme des Rohres eingesetzt. Da die Durchführung des Elastomer-Einsatzes regelmäßig hohlzylindrisch glatt ausgebildet ist, kann diese Ausführung auch für Schläuche eingesetzt werden.

In der Praxis hat sich gezeigt, dass Anwender von Schellen nach DIN 3015 Schläuche nicht nur "führen", sondern auch "fixieren" möchten, weshalb auch zur Befestigung von Schläuchen die gerippte Bauart eingesetzt wird. Hierbei kann es jedoch aufgrund von Schlauchbewegungen und den für die Rohrhalterung scharfkantig ausgelegten Rippen zu Beschädigungen an den Schläuchen kommen. Um derartige Beschädigungen von Schläuchen zu vermeiden ist es gemäß den Vorgaben der Berufsgenossenschaft nicht zulässig, Schläuche zu fixieren.

Hier setzt die vorliegende Erfindung an. Der Erfindung liegt die Aufgabe zu Grunde, eine Vorrichtung zur Befestigung von Schläuchen bereitzustellen, die eine Fixierung von Schläuchen bei gleichzeitiger Vermeidung von Beschädigungen ermöglicht. Gemäß der Erfindung wird diese Aufgabe durch die Merkmale des kennzeichnenden Teils des Patentanspruchs 1 gelöst.

Mit der Erfindung ist eine Vorrichtung Befestigung von Schläuchen bereitgestellt, die eine Fixierung von Schläuchen bei gleichzeitiger Vermeidung von Beschädigungen ermöglicht. Dadurch, dass in die Innenmantelfläche der Durchführung wenigstens eine radial umlaufende Rille mit bogenförmigem, insbesondere kantenfreiem Querschnitt angeordnet ist, ist auch bei Schlauchbewegungen eine Beschädigung vermieden. Der in der Durchführung gehaltene Schlauch liegt an der Innenmantelfläche der Durchführung an, ohne einer partiell erhöhten Flächenpressung unterworfen zu sein. Zugleich legt sich das flexible Schlauchmaterial an die Kontur der wenigstens einen umlaufenden, einen Hinterschnitt ausbildenden Rille an, wodurch eine formschlüssige Verbindung zwischen Schlauch und Schelle bewirkt ist. Der Schlauch ist so in der Befestigungsvorrichtung axial wie auch radial fixiert.

In Weiterbildung der Erfindung sind wenigstens zwei umlaufende Rillen parallel zueinander angeordnet. Hierdurch ist der Formschluss zwischen dem aufgenommenen Schlauch und der Befestigungsvorrichtung erhöht.

In Ausgestaltung der Erfindung ist die Innenmantelfläche der durch die Befestigungsteile gebildeten Durchführung zumindest außerhalb der mit der wenigstens einen Rille versehenen Fläche im Wesentlichen glatt ausgebildet. Hierdurch ist einem möglichen Schlauchabrieb bei Schlauchbewegungen entgegengewirkt. Bevorzugt ist auch die zwischen den Rillen befindliche Innenmantelfläche der Durchführung glatt ausgebildet.

In weiterer Ausgestaltung der Erfindung ist der Übergang der Stirnflächen der Befestigungsteile zur Durchführung abgerundet und insbesondere Kantenfrei ausgebildet. Hierdurch ist einer Beschädigung eines von der Durchführung aufgenommenen Schlauchs weiter entgegengewirkt.

In Weiterbildung der Erfindung ist die wenigstens eine Rille zumindest bereichsweise mit einem Profil und/oder einer Texturierung versehen. Hierdurch ist der Formschluss zwischen Schlauch und Befestigungsvorrichtung weiter verbessert.

In Ausgestaltung der Erfindung weisen die Befestigungsteile jeweils ein Einsatzteil auf, welche Einsatzteile im montierten Zustand der Befestigungsteile einen Einsatz ausbilden, der die mit der wenigstens einen Rille versehene Durchführung ausbildet. Dabei sind die Einsatzteile bevorzugt aus einem von dem Material der Befestigungsteile verschiedenen, insbesondere elastischeren Material hergestellt. Durch die elastische Gestaltung der Einsatzteile wird der Formschluss zwischen diesen und dem von der Durchführung aufgenommenen Schlauch unterstützt. Dabei können die aus einem vorzugsweise unelastischeren Material hergestellten Befestigungsteile stabiler ausgelegt sein. Besonders bevorzugt sind die Einsatzteile aus einem thermoplastischen Elastomer gebildet.

In weiterer Ausgestaltung der Erfindung bilden die beiden Einsatzteile des Einsatzes einen hohlzylindrischen Grundkörper aus, auf dessen Außenmantelfläche beabstandet zueinander zwei radial umlaufende Stege angeformt sind, zwischen welche Stege ein radialer Mittelsteg der Befestigungsteile eingreift. Hierdurch ist der Einsatz zuverlässig in der Vorrichtung gehalten.

In Weiterbildung der Erfindung sind die umlaufenden Stege mit beabstandet zueinander angeordneten Aussparungen versehen, wodurch eine kammartige Stegform gebildet ist. Hierdurch ist die Anlagefläche der umlaufenden Stege an der durch die Befestigungsteile gebildeten Durchführung vermindert, wodurch die Schallübertragung reduziert ist. Dabei können die Aussparungen alle oder teilweise in den Grundkörper hineinragend fortgeführt sein, wodurch im Bereich dieser Aussparungen die Materialstärke des Grundkörpers reduziert ist.

In Ausgestaltung der Erfindung ist der Innendurchmesser des Mittelsteges der Befestigungsteile kleiner, als der Durchmesser der Außenmantelfläche des Grundkörpers, wobei die nach außen kragenden Stege des Einsatzes an der Durchführung beidseitig des Mittelsteges anliegen. Hierdurch liegt der zwischen den nach außen kragenden Stegen befindliche Innenbereich der Außenmantelfläche des Einsatzes nicht an dem Mittelsteg der Durchführung an, weshalb in diesem Bereich keine Vibrations- oder Schallübertragung stattfindet. Die schall- und vibrationsreduzierenden Eigenschaften sind hierdurch verbessert.

In Ausgestaltung der Erfindung sind die Einsatzteile identisch ausgebildet, wobei bevorzugt jeweils in dem Querschnitt eines nach außen kragenden Steges auf einer Seite eine Bohrung und auf der gegenüberliegenden Seite ein Stift angeordnet ist, sodass jedes Einsatzteil zwei diagonal zueinander angeordnete Stifte und zwei diagonal zueinander angeordnete Bohrungen aufweist, derart, dass eine Steckverbindung der beiden Einsatzteile ermöglicht ist. Hierdurch ist eine zuverlässige Fixierung der beiden Einsatzteile erzielt.

In Weiterbildung der Erfindung ist der Einsatz aus einem Elastomer hergestellt. Gute Ergebnisse wurden auch bei Verwendung eines thermoplastischen Kautschuks erzielt. Dieses Material weist gegenüber vergleichbaren vulkanisierten Gummierzeugnissen deutlich verbesserte Materialeigenschaften hinsichtlich Elastizität und Beständigkeit gegenüber äußeren Einflüssen auf.

In Ausgestaltung der Erfindung sind die beiden Befestigungsteile zumindest an ihren zueinander zugewandten Seiten, bevorzugt jedoch insgesamt identisch ausgebildet. Hierdurch ist der Fertigungsaufwand vermindert. Bei identischer Ausgestaltung der Befestigungsteile sind zudem Lageraufwände minimiert.

In weiterer Ausgestaltung der Erfindung sind die Befestigungsteile im Wesentlichen aus Kunststoff ausgebildet. Hierdurch ist eine kostengünstige Fertigung langlebiger und korrosionsresistenter Befestigungsteile ermöglicht. Bevorzugt sind die Befestigungsteile aus einem elastischen Kunststoff, vorzugsweise aus thermoplastischem Elastomer (TPE) oder einem ähnlich elastischem Material hergestellt.

Bei Anordnung von die Durchführung ausbildenden Einsatzteilen aus elastischem Material können die Befestigungsteile auch aus Metall, insbesondere Aluminium, Stahl oder Edelstahl hergestellt sein.

Andere Weiterbildungen und Ausgestaltungen der Erfindung sind in den übrigen Unteransprüchen angegeben. Ein Ausführungsbeispiel ist in der Zeichnung dargestellt und wird nachfolgend im Einzelnen beschrieben. Es zeigen:
- Figur 1: die schematische Darstellung einer Vorrichtung zur Befestigung von Schläuchen in räumlicher Darstellung:
- Figur 2: die Darstellung einer Vorrichtung zur Befestigung von Schläuchen in einer weiteren Ausführungsform;
- Figur 3: die Darstellung einer Vorrichtung zur Befestigung von Schläuchen in einer dritten Ausführungsform und
- Figur 4: die schematische Darstellung einer Vorrichtung zur Befestigung von Schläuchen in einer vierten Ausführungsform.

Die als Ausführungsbeispiel gewählte Vorrichtung zur Befestigung von Schläuchen ist als blockförmige Schlauchschelle 1 ausgebildet, welche aus zwei identisch gestalteten Schlauchschellenhälften 2 zusammengesetzt ist.

Die Schlauchschellenhälften 2 sind im Ausführungsbeispiel aus Polypropylen (PP) hergestellt und weisen einen im Wesentlichen quaderförmig ausgebildeten Grundkörper auf, in den mittig in Querrichtung eine halbzylinderförmige Ausnehmung 21 eingeformt ist. In die durch die Ausnehmungen 21 begrenzten Innenmantelflächen 22 der Rohrschellenhälften 2 sind beabstandet zueinander zwei radial umlaufende Rillen 23 mit bogenförmigem Querschnitt eingeformt. Der Übergang zwischen den Rillen 23 und der Innenmantelfläche 22 sind abgerundet ausgebildet, wodurch eine kantenfreie, glatte Oberfläche gebildet ist. Der jeweilige Übergang der durch die Ausnehmung 1 gebildeten Innenmantelfläche 22 zu den Stirnflächen 24 der Schlauchschellenhälften 2 sind ebenfalls abgerundet und insbesondere kantenfrei ausgebildet.

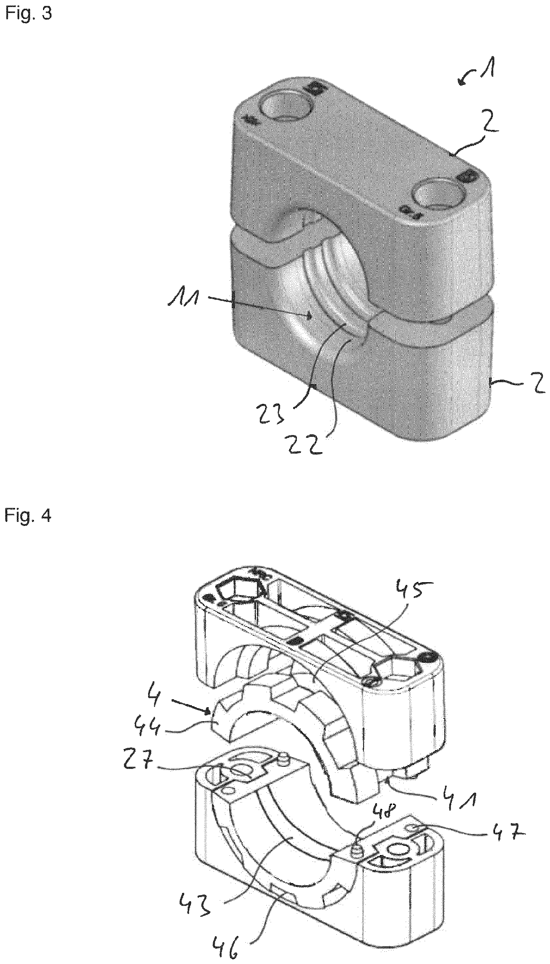

In die Schlauchschellenhälften 2 sind zu beiden Seiten der Ausnehmung 21 gegenüberliegend zwei Bohrungen 25 eingebracht. Die Bohrungen 25 dienen der Durchführung von Schrauben zur Verspannung der beiden Schlauchschellenhälften 2 gegen einen von der durch die Ausnehmungen 21 gebildeten Durchführung 11 aufgenommenen - nicht dargestellten - Schlauch. Weiterhin sind zwischen den Bohrungen 25 Aussparungen 26 eingebracht. Diese Aussparungen 26 dienen der Materialersparnis sowie der Gewichtsreduktion der Schlauchschellenhälften 2. Im Ausführungsbeispiel gemäß Figur 3 sind die Schlauchschellenhälften 2 aus Vollelastomer hergestellt. Aus Stabilitätsgründen sind hierbei keine Aussparungen eingebracht.

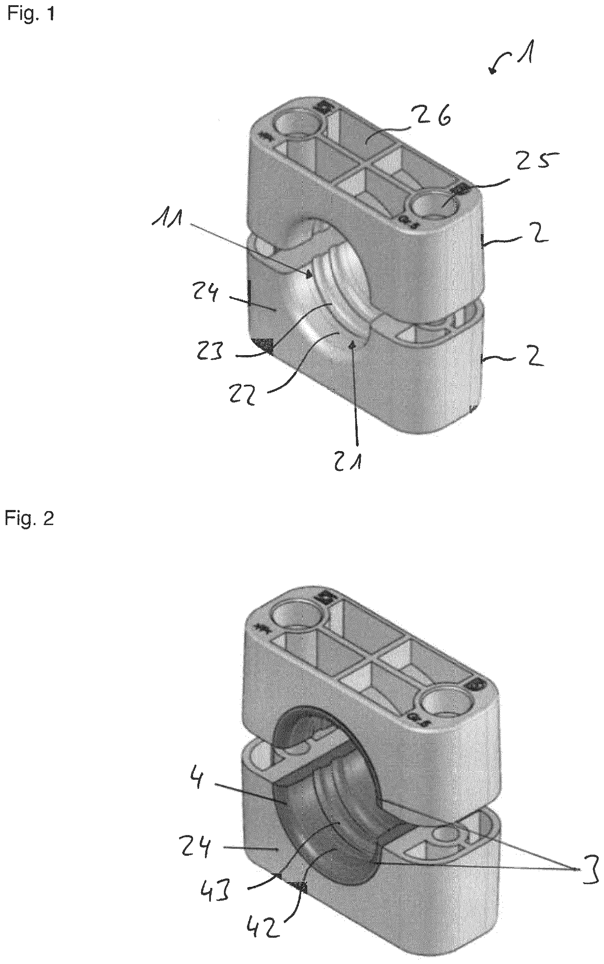

Im Ausführungsbeispiel gemäß Figur 2 nimmt die Schlauchschelle 1 einen Einsatz 3 auf, der die Durchführung 11 der Schlauchschelle 1 ausbildet. Der Einsatz 3 ist im Ausführungsbeispiel aus einem thermoplastischen Elastomer hergestellt und ist aus zwei Einsatzhälften 4 zusammengesetzt, die identisch ausgebildet sind. Die Einsatzhälften 4 bestehen jeweils aus einem hälftigen hohlzylindrischen Grundkörper 41, in dessen Innenmantelfläche 42 parallel zueinander zwei Rillen 43 eingeformt sind. Endseitig sind die Innenmantelflächen 42 der Einsatzhälften 4 radial nach außen abgerundet ausgebildet. Dabei legt sich die jeweilige Einsatzhälfte 4 vorzugsweise kantenfrei an die Stirnfläche 24 der jeweiligen Schlauchschellenhälfte 2 an.

Im Ausführungsbeispiel gemäß Figur 4 nimmt die Schlauchschelle 1 wiederum einen Einsatz 3 auf, der die Durchführung 11 der Schlauchschelle 1 ausbildet und der aus zwei identisch ausgebildeten Einsatzhälften 4 zusammengesetzt ist, die aus einem thermoplastischen Elastomer hergestellt sind. Die Einsatzhälften 4 bestehen jeweils aus einem hälftigen hohlzylindrischen Grundkörper 41, in dessen Innenmantelfläche 42 parallel zueinander zwei Rillen 43 eingeformt sind. Auf den Außenmantelflächen der Einsatzhälften 4 sind gegenüberliegend randseitig zwei umlaufende radial nach außen kragende Stege 44 angeformt, zwischen denen eine Nut 45 gebildet ist. In die umlaufenden Stege 44 sind in regelmäßigen Abständen zueinander Aussparungen 46 eingebracht, wodurch eine kammartige Form der umlaufenden Stege 44 gebildet ist.

Zur formschlüssigen Verbindung der beiden Einsatzhälften 4 sind in den Querschnitt der beiden identisch ausgebildeten Einsatzhälften 4 jeweils im Bereich des nach außen kragenden Steges 44 auf einer Seite eine Bohrung 47 und auf der gegenüberliegenden Seite ein Stift 48 angeordnet, sodass jede der Einsatzhälften 4 zwei diagonal zueinander angeordnete Stifte 48 und zwei diagonal zueinander angeordnete Bohrungen 47 aufweist. In montiertem Zustand des Einsatzes 3 greifen die Stifte 48 einer Einsatzhälfte 4 jeweils in eine Bohrung 47 der gegenüberliegend angeordneten Einsatzhälfte 4 ein.

Der Einsatz 3 ist derart in die Ausnehmungen 21 der Rohrschellenhälften 2 eingesetzt, dass die beiden umlaufenden Stege 44 beidseitig eines an die Schlauchschellenhälften angeordneten Mittelsteges 27 an den Ausnehmungen 21 anliegen. Dabei kann der Innendurchmesser des Mittelsteges 27 der durch die Schlauchschellenhälften 2 gebildeten Schlauchschelle 1 bevorzugt kleiner gewählt sein, als der Durchmesser der Außenmantelfläche des Grundkörpers 41 des durch die Einsatzhälften 4 gebildeten Einsatzes 3. Der Einsatz 3 liegt in diesem Fall lediglich mit den Stegen 44, deren Anlagefläche durch die Aussparungen 46 reduziert ist, an der Schlauchschelle 1 an. Die Kontaktfläche des Einsatzes 3 mit dem aufzunehmenden - nicht dargestellten - Schlauchs ist durch die mit den Rillen 43 versehenen Innenmantelflächen der Grundkörper 41 der Einsätze 4 gebildet.

Endseitig sind die Innenmantelflächen 42 der Einsatzhälften 4 wiederum radial nach außen abgerundet ausgebildet. (Diese Abrundung ist in der lediglich schematischen Darstellung in Figur 4 nicht gezeigt).

## Patentansprüche

1. Vorrichtung (1) zur Befestigung von Schläuchen, umfassend zwei miteinander verbindbare Befestigungsteile (2), welche im montierten Zustand eine Durchführung (11) mit einem elliptischen, insbesondere kreisförmigen Querschnitt bilden, wobei in die Innenmantelfläche (22, 42) der Durchführung (11) wenigstens eine radial umlaufende Rille (23, 43) mit bogenförmigem und kantenfreiem Querschnitt angeordnet ist, **dadurch gekennzeichnet, dass** der Übergang zwischen der wenigstens einen radial umlaufenden Rille (23, 43) und der Innenmantelfläche (22,42) der Durchführung (11) abgerundet ausgebildet ist.

2. Vorrichtung nach Anspruch 1, **dadurch gekennzeichnet, dass** wenigstens zwei solcher radial umlaufenden Rillen (23, 43) parallel zueinander angeordnet sind.

3. Vorrichtung nach einem der vorgenannten Ansprüche, **dadurch gekennzeichnet, dass** die Innenmantelfläche (22, 42) der durch die Befestigungsteile (2) gebildeten Durchführung (11) zumindest außerhalb der mit der wenigstens einen Rille (23, 43) versehenen Innenmantelfläche (22,42) im Wesentlichen glatt ausgebildet ist.

4. Vorrichtung nach einem der vorgenannten Ansprüche, **dadurch gekennzeichnet, dass** der Übergang der Stirnflächen (24) der Befestigungsteile (2) zur Durchführung (11) abgerundet und insbesondere kantenfrei ausgebildet ist.

5. Vorrichtung nach einem der vorgenannten Ansprüche, **dadurch gekennzeichnet, dass** die wenigstens eine Rille (23, 43) zumindest bereichsweise mit einem Profil und/oder einer Texturierung versehen ist.

6. Vorrichtung nach einem der vorgenannten Ansprüche, **dadurch gekennzeichnet, dass** die Befestigungsteile (2) jeweils ein Einsatzteil (4) aufweisen, welche Einsatzteile (4) im montierten Zustand der Befestigungsteile (2) einen Einsatz (3) ausbilden, der die mit der wenigstens einen Rille (43) versehene Durchführung (11) ausbildet.

7. Vorrichtung nach Anspruch 6, **dadurch gekennzeichnet, dass** die Einsatzteile (4) aus einem von dem Material der Befestigungsteile (2) verschiedenen, insbesondere elastischeren Material hergestellt sind.

8. Vorrichtung nach Anspruch 7, **dadurch gekennzeichnet, dass** die Einsatzteile (4) aus einem thermoplastischen Elastomer gebildet sind.

9. Vorrichtung nach einem der Ansprüche 6 bis 8, **dadurch gekennzeichnet, dass** die beiden Einsatzteile (4) des Einsatzes (3) einen hohlzylindrischen Grundkörper (41) ausbilden, auf dessen Außenmantelfläche beabstandet zueinander zwei radial umlaufende Stege (44) angeformt sind, zwischen welche Stege (44) ein radialer Mittelsteg (27) der Befestigungsteile (2) eingreift.

10. Vorrichtung nach Anspruch 9, **dadurch gekennzeichnet, dass** die umlaufenden Stege (44) mit beabstandet zueinander angeordneten Aussparungen (46) versehen sind, wodurch eine kammartige Stegform gebildet ist.

11. Vorrichtung nach einem der Ansprüche 6 bis 10, **dadurch gekennzeichnet, dass** die Einsatzteile (4) identisch ausgebildet sind.

12. Vorrichtung nach einem der vorgenannten Ansprüche, **dadurch gekennzeichnet, dass** die Befestigungsteile (2) identisch ausgebildet sind.

13. Vorrichtung nach einem der vorgenannten Ansprüche, **dadurch gekennzeichnet, dass** die Befestigungsteile (2) aus einem elastischen Kunststoff, vorzugsweise aus thermoplastischem Elastomer (TPE) hergestellt sind.

## Claims

1. Device (1) for the fixing of hoses comprising two interconnectable fixing parts (2), which, in the assembled state, form a lead-through (11) with an elliptic, in particular circular, cross-section, wherein at least one radially circumferential groove (23, 43) with an arcuate and edge-free cross-section is arranged in the inner surface (22, 42) of the lead-through (11), **characterised in that** the transition between the at least one radially circumferential groove (23, 43) and the inner surface (22, 42) of the lead-through (11) is rounded.

2. Device according to claim 1, **characterised in that** at least two such radially circumferential grooves (23, 43) are arranged parallel to one another.

3. Device according to one of the previous claims, **characterised in that** the inner surface (22, 42) of the lead-through (11) formed by the fixing parts (2) is substantially smooth at least outside of the inner surface (22, 42) provided with the at least one groove (23, 43).

4. Device according to one of the previous claims, **characterised in that** the transition of the end faces (24) of the fixing parts (2) to the lead-through (11) are rounded and in particular edge-free.

5. Device according to one of the previous claims, **characterised in that** the at least one groove (23, 43) is provided at least in regions with a profile and/or a texturing.

6. Device according to one of the previous claims, **characterised in that** the fixing parts (2) each have an insert part (4), which insert parts (4) form an insert (3) in the assembled state of the fixing parts (2), which forms the lead-through (11) provided with the at least one groove (43).

7. Device according to claim 6, **characterised in that** the insert parts (4) are made of a material which is different from the material of the fixing parts (2), in particular a more elastic material.

8. Device according to claim 7, **characterised in that** the insert parts (4) are made of a thermoplastic elastomer.

9. Device according to one of claims 6 to 8, **characterised in that** the two insert parts (4) of the insert (3) form a hollow-cylindrical base body (41), on the outer surface of which two radially circumferential webs (44) are formed at a distance from one another, between which webs (44) a radial central web (27) of the fixing parts (2) engages.

10. Device according to claim 9, **characterised in that** the circumferential webs (44) are provided with recesses (46) arranged at a distance from one another, thereby forming a comb-like web shape.

11. Device according to one of claims 6 to 10, **characterised in that** the insert parts (4) are of identical design.

12. Device according to one of the previous claims, **characterised in that** the fixing parts (2) are of identical design.

13. Device according to one of the previous claims, **characterised in that** the fixing parts (2) are made of an elastic plastic, preferably of thermoplastic elastomer (TPE).

## Revendications

1. Dispositif pour la fixation de tuyaux flexibles, comprenant deux pièces de fixation (2) reliables entre elles, qui à l'état monté forment un passage (11) dont la section est de forme elliptique et en particulier circulaire, sachant que dans la surface enveloppante intérieure (22, 42) du passage (11) est disposée au moins une rainure (23, 43) périphérique radiale de section arquée et sans arête, **caractérisé en ce que** la transition entre au moins une rainure (23, 43) périphérique radiale et la surface enveloppante intérieure (22, 42) du passage (11) est configurée arrondie.

2. Dispositif selon la revendication 1, **caractérisé en ce qu'**au moins deux rainures (23, 43) périphériques radiales de ce genre sont disposées mutuellement parallèles.

3. Dispositif selon l'une des revendications précédentes, **caractérisé en ce que** la surface enveloppante intérieure (22, 42) du passage (11) formé par les pièces de fixation (2) est configurée pour l'essentiel lisse au moins en dehors de la surface enveloppante intérieure (22, 42) présentant une rainure (23, 43).

4. Dispositif selon l'une des revendications précédentes, **caractérisé en ce que** la transition entre les surfaces frontales (24) des pièces de fixation (2) et le passage (11) est configurée arrondie et en particulier exempte d'arêtes.

5. Dispositif selon l'une des revendications précédentes, **caractérisé en ce qu'**au moins une rainure (23, 43) présente au moins localement un profil et/ou une texturation.

6. Dispositif selon l'une des revendications précédentes, caractérisé en ce les pièces de fixation (2) présentent chacune une pièce (4) d'insert, lesquelles pièces (4) d'insert forment un insert (3) lorsque les pièces de fixation (2) sont à l'état monté, insert qui forme le passage (11) doté d'au moins une rainure (43).

7. Dispositif selon la revendication 6, **caractérisé en ce que** les pièces (4) d'insert sont fabriquées à partir d'un matériau différent de celui des pièces de fixation (2), notamment à partir d'un matériau plus élastique.

8. Dispositif selon la revendication 7, **caractérisé en ce que** les pièces d'insert (4) sont formées à partir d'un élastomère thermoplastique.

9. Dispositif selon l'une des revendications 6 à 8, **caractérisé en ce que** les deux pièces (4) d'insert de l'insert (3) forment un corps de base (41) cylindrique creux sur la surface enveloppante extérieure duquel sont formées deux nervures (44) radiales périphériques distantes l'une de l'autre, qu'entre lesdites nervures (44) engrène une nervure médiane radiale (27) des pièces de fixation (2).

10. Dispositif selon la revendication 9, **caractérisé en ce que** les nervures (44) périphériques présentent des évidements (46) disposés distants les uns des autres, faisant qu'est formée une nervure en forme de peigne.

11. Dispositif selon l'une des revendications 6 à 10, **caractérisé en ce que** les pièces (4) d'insert sont de forme identique.

12. Dispositif selon l'une des revendications précédentes, **caractérisé en ce que** les pièces de fixation (2) sont de forme identique.

13. Dispositif selon l'une des revendications précédentes, caractérisé en ce les pièces de fixation (2) ont été fabriquées en un plastique élastique, de préférence en élastomère thermoplastique (TPE).
